# Europäisches Patentamt

# European Patent Office

# Office européen des brevets

(19)

(11) Veröffentlichungsnummer: **0 041 191**

**A2**

(12) # EUROPÄISCHE PATENTANMELDUNG

(21) Anmeldenummer: **81103923.9**

(22) Anmeldetag: **21.05.81**

(51) Int. Cl.³: **H 02 P 3/24**
**H 02 P 3/22**

(30) Priorität: **02.06.80 DE 3020850**

(43) Veröffentlichungstag der Anmeldung:
**09.12.81 Patentblatt 81/49**

(84) Benannte Vertragsstaaten:
**AT BE CH DE LI SE**

(71) Anmelder: **SIEMENS AKTIENGESELLSCHAFT**
**Postfach 22 02 61**
**D-8000 München 22(DE)**

(72) Erfinder: **Schmidt, Helmut**
**Am Europakanal 4**
**D-8520 Erlangen(DE)**

(54) Verfahren zur Gleichstrombremsung einer Drehstromasynchronmaschine und Schaltungsanordnung zur Durchführung des Verfahrens.

(57) Die Erfindung betrifft ein Verfahren zur Gleichstrombremsung einer Drehstromasynchronmaschine mit zugehöriger Schaltungsanordnung. Bei Bremsbeginn werden die erste und dritte der in Sternschaltung angeordneten Statorwicklungen (1,3) durch einen ersten und vierten Schalter (7,11) von den Phasen (4,6) getrennt. Dem ersten Schalter (7) ist ein Stromrichterventil (8) und ein beim Bremsen geschlossener zweiter Schalter (9) parallelgeschaltet. Der dritten Statorwicklung (3) ist ein dritter Schalter (10) parallelgeschaltet, der bei Beginn des Bremsens geschlossen wird. Von der Phase (5) fließt ein pulsierender Gleichstrom zur Phase (4). Der Gleichstrom erzeugt ein Rotorfeld, das in der Statorwicklung (3) einen Kurzschlußstrom induziert, der zur Abbremsung der Drehstromasynchronmaschine führt. Der Kurzschlußstrom wird über einen Stromwandler (12) und einen Grenzwertgeber (13) einem digitalen ODER-Verknüpfungsglied (14) zugeführt, mit dessen Ausgangssignal der zweite Schalter (9) geschlossen wird. Bei Bremsbeginn wird ein kurzer Impuls aus einem Impulsgeber (16) dem Verknüpfungsglied (14) zugeführt, der dem Signal für einen Kurzschlußstrom entspricht. Bei Stillstand des Rotors und dadurch ausbleibendem Kurzschlußstrom wird durch ein Signal der zweite Schalter (9) geöffnet, wodurch der Gleichstrom selbsttätig abgeschaltet wird.

EP 0 041 191 A2

Croydon Printing Company Ltd.

SIEMENS AKTIENGESELLSCHAFT

Berlin und München

Unser Zeichen

VPA 80 P 3 0 7 8 · E

### Verfahren zur Gleichstrombremsung einer Drehstromasynchronmaschine und Schaltungsanordnung zur Durchführung des Verfahrens

Die Erfindung betrifft ein Verfahren zur Gleichstrombremsung einer Drehstromasynchronmaschine mit drei Statorwicklungen in Sternschaltung, wobei zum Bremsen die erste und die zweite Statorwicklung mit Gleichstrom beaufschlagt werden und gleichzeitig die dritte Statorwicklung kurzgeschlossen wird und eine Schaltungsanordnung zur Durchführung des Verfahrens.

Ein derartiges Verfahren mit zugehöriger Schaltungsanordnung ist aus der DE-PS 698 812 bekannt. Zur Bremsung eines Drehstromasynchronmotors mit Statorwicklungen in Sternschaltung wird dort eine Statorwicklung kurzgeschlossen und die beiden anderen in Reihe geschalteten Statorwicklungen werden mit Gleichstrom beaufschlagt. Bei diesem Verfahren wird die Abschaltung des Gleichstromes durch das verzögerte Schalten eines Relais bewirkt, womit eine konstante Bremszeit vorgegeben ist. Dabei kann es vorkommen, daß der Gleichstrom bei noch nicht beendetem Bremsen abgeschaltet wird. Ebenso ist es möglich, daß das Bremsen bereits vor Abschalten des Gleichstromes beendet ist, so daß der bis zum Abschalten noch durch die beiden Statorwicklungen fließende Gleichstrom Verlustleistung erzeugt.

Der Erfindung liegt die Aufgabe zugrunde, ein Verfahren und eine Schaltungsanordnung der eingangs genannten Art so auszugestalten, daß die Bremszeit für eine Drehstrom-

Fi 2 Mka/28.05.1980

asynchronmaschine selbsttätig mit dem Stillstand des Rotors endet.

Erfindungsgemäß wird diese Aufgabe dadurch gelöst, daß mit Beginn des Bremsens der Kurzschlußstrom durch die dritte Statorwicklung erfaßt wird und bei Beendigung des Kurzschlußstromes der Gleichstrom abgeschaltet wird.

Der durch die erste und die zweite Statorwicklung fließende Gleichstrom erzeugt ein Rotorfeld, das in der kurzgeschlossenen dritten Statorwicklung einen Strom induziert. Dieser induzierte Strom bewirkt eine Abbremsung der Drehstromasynchronmaschine. Durch die dritte Statorwicklung fließt so lange ein Kurzschlußstrom, wie der Rotor der Drehstromasynchronmaschine sich dreht. Durch die Erfassung des Kurzschlußstroms wird die vollzogene Bremsung bei Stillstand des Rotors signalisiert. Die mit einem Stillstand des Rotors verbundene Beendigung des Kurzschlußstromes bewirkt die Abschaltung des durch die erste und die zweite Statorwicklung fließenden Gleichstroms. Die Bremszeit ist so bemessen, daß sie bei Stillstand oder bei einer vorgegebenen sehr geringen Drehzahl des Rotors endet. Durch das Ausbleiben des Kurzschlußstromes bei Stillstand des Rotors oder durch das bei einer sehr geringen Drehzahl bedingte Absinken des Kurzschlußstromes unter einen vorgegebenen Grenzwert wird der durch die erste und die zweite Statorwicklung fließende Gleichstrom abgeschaltet. Damit wird die Bremszeit für eine Drehstromasynchronmaschine selbsttätig beendet. Mit diesem Verfahren ist eine variable Bremszeit realisierbar, die derjenigen Zeit entspricht, die für die tatsächliche Bremsung erforderlich ist. Durch das selbsttätige Abschalten des durch die erste und die zweite Statorwicklung fließenden Gleichstromes werden Verluste vermieden, die sonst bei Abschaltung des Gleichstroms nach Beendigung des Bremsvorganges auftreten. Weiterhin wird durch die selbsttätige Anpassung der Bremszeit an die
Dauer des tatsächlichen Bremsvorganges vermieden, daß der
Gleichstrom vor Beendigung des Bremsvorganges abgeschaltet wird und damit der Bremsvorgang vor Erreichen des
Stillstandes oder einer vorgegebenen sehr geringen Drehzahl des Rotors abgebrochen wird.

Bei einer Schaltungsanordnung zur Durchführung des Verfahrens, in der der ersten Statorwicklung eine Parallelschaltung aus einem in Betriebsstellung geschlossenen
ersten Schalter und einer Reihenschaltung aus einem Stromrichterventil und einem in Betriebsstellung geöffneten
zweiten Schalter vorgeschaltet ist und der dritten Statorwicklung, der ein in Betriebsstellung geöffneter dritter Schalter parallelgeschaltet ist, ein in Betriebsstellung geschlossener vierter Schalter vorgeschaltet ist,
kann ein Stromfühler im Stromkreis der kurzgeschlossenen
dritten Statorwicklung mit dem Eingang eines Grenzwertgebers verbunden sein, der Ausgang des Grenzwertgebers mit
dem ersten Eingang eines digitalen Verknüpfungsgliedes
mit disjunktiver Verknüpfung verbunden sein, der Ausgang
eines Auslöseschalters mit den Betätigungseingängen des
ersten, des dritten und des vierten Schalters verknüpft
und mit dem Eingang eines Impulsgebers verbunden sein,
dessen Ausgang dem zweiten Eingang des digitalen Verknüpfungsgliedes zugeführt sein und der Ausgang des digitalen
Verknüpfungsgliedes mit dem Betätigungseingang des zweiten Schalters verbunden sein. Mit dieser Schaltungsanordnung läßt sich dieses Verfahren realisieren.

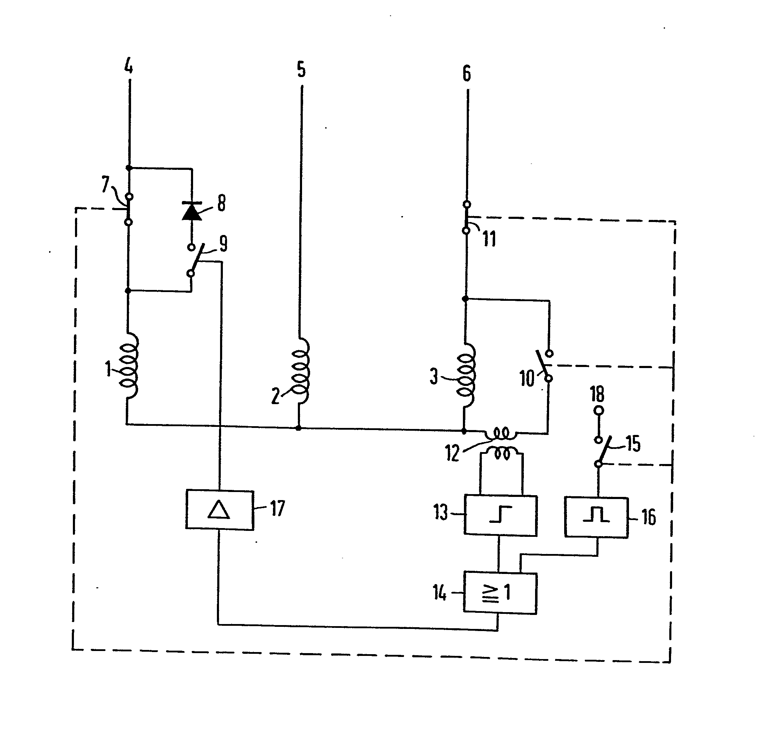

Das erfindungsgemäße Verfahren und eine Schaltungsanordnung zur Durchführung des Verfahrens werden im folgenden
beispielhaft anhand der Figur erläutert.

In der Figur sind die drei in Sternschaltung angeordneten
Statorwicklungen 1, 2, 3 einer Drehstromasynchronmaschine dargestellt. Der Rotor der Drehstromasynchronmaschine ist in der Figur nicht enthalten. Die Statorwicklung 1 ist über eine Parallelschaltung aus einem ersten Schalter 7 und einer Reihenschaltung aus einem Stromrichterventil 8 und einem zweiten Schalter 9 mit der Phase 4 eines Drehstrom-Betriebsnetzes verbunden. Das Stromrichterventil 8 ist beispielsweise eine Diode. Die Statorwicklung 2 ist direkt mit der Phase 5 und die Statorwicklung 3 ist über einen vierten Schalter 11 mit der Phase 6 verbunden. Der Statorwicklung 3 ist ein dritter Schalter 10 parallelgeschaltet. Der erste Schalter 7 und der vierte Schalter 11 sind in Betriebsstellung, d.h. bei Fahrbetrieb des Drehstromasynchronmotors, geschlossen. Der zweite Schalter 9 und der dritte Schalter 10 sind in Betriebsstellung geöffnet.

Die beiden Enden der Primärwicklung eines als Stromfühler dienenden Stromwandlers 12 sind mit der Statorwicklung 3 und dem dritten Schalter 10 verbunden. Die beiden Enden der Sekundärwicklung des Stromwandlers 12 sind mit dem Eingang eines Grenzwertgebers 13 verbunden, der beispielsweise ein monostabiler Multivibrator ist. Der Ausgang des Grenzwertgebers 13 ist mit dem einen Eingang eines ODER-Gliedes als digitalem Verknüpfungsglied 14 verbunden. Der Ausgang eines Auslöseschalters 15 ist mit dem Eingang eines Impulsgebers 16 verbunden. Der Ausgang des Impulsgebers 16 ist dem zweiten Eingang des digitalen Verknüpfungsgliedes 14 zugeführt. Der Ausgang des digitalen Verknüpfungsgliedes 14 ist über einen Impulsverstärker 17 mit dem Betätigungseingang des zweiten Schalters 9 verbunden. Der Auslöseschalter 15 ist weiterhin mit den Betätigungseingängen des ersten, des dritten und des vierten Schalters 7, 10, 11 verknüpft.

0041191

Bei Fahrbetrieb des Drehstromasynchronmotors sind die Schalter 7, 9, 10, 11 und 15 in ihren Betriebsstellungen, die den in der Figur dargestellten Schalterstellungen entsprechen. Auf die Auslöseeinrichtung und gegebenenfalls eine Steuerungs- und Regelungseinrichtung für den Fahrbetrieb wird nicht weiter eingegangen, um die Übersichtlichkeit zu wahren.

Bei Beginn des Bremsens wird der Schalter 15 umgeschaltet und dadurch mit einer Hilfsspannungsquelle 18 verbunden. Durch diese Maßnahme werden der erste Schalter 7 und der vierte Schalter 11, die im Fahrbetrieb geschlossen waren, geöffnet und der dritte, im Fahrbetrieb offene Schalter 10 wird geschlossen. Durch das Öffnen des Schalters 11 ist die Statorwicklung 3 von der Phase 6 des Drehstrom-Betriebsnetzes getrennt. Durch den geschlossenen Schalter 10 ist die Statorwicklung 3 kurzgeschlossen. Die Statorwicklung 1 ist durch das Öffnen des Schalters 7 von der Phase 4 getrennt. Der für die Bremsung erforderliche Gleichstrom wird dadurch erzeugt, daß bei Beginn des Bremsens der zweite Schalter 9 geschlossen wird. Dadurch fließt von der Phase 5 über die Statorwicklungen 2 und 1, den Schalter 9 und die Diode 8 ein pulsierender Gleichstrom zur Phase 4. Der durch die Statorwicklungen 2 und 1 fließende Gleichstrom bewirkt im Rotor Kurzschlußströme, die ein Rotorfeld erzeugen. Durch das Rotorfeld wird in der Statorwicklung 3 ein Strom induziert, der in dem kurzgeschlossenen Stromkreis aus der Statorwicklung 3, der Primärwicklung des Stromwandlers 12 und dem dritten Schalter 10 fließt und Verluste bewirkt, die zu einer Abbremsung des Rotors führen. Solange der Rotor sich dreht, wird in der Statorwicklung 3 ein Strom induziert. Der durch die Statorwicklung 3, die Primärwicklung des Stromwandlers 12 und über den Schalter 10 fließende Kurzschlußstrom induziert in der Sekundärwicklung des Stromwandlers 12 einen Strom, der dem Grenzwertgeber 13 zugeführt wird. Der Grenzwertgeber 13 ist so eingestellt, daß er für die im Stromwandler 12 induzierten Ströme, die vom drehenden Rotor verursacht werden, ein dem Drehen des Rotors entsprechendes erstes Signal, beispielsweise das digitale Signal EINS, an das digitale Verknüpfungsglied 14 liefert. Bei Stillstand des Rotors oder bei einer festgelegten sehr geringen Drehzahl des Rotors liefert der Grenzwertgeber 13 ein zweites Signal, beispielsweise das digitale Signal NULL, an das digitale Verknüpfungsglied 14. Das Ausgangssignal des Grenzwertgebers 13 wird dem ersten Eingang des digitalen Verknüpfungsgliedes 14 zugeführt. Dem zweiten Eingang des digitalen Verknüpfungsgliedes 14 wird bei Beginn des Bremsens ein kurzzeitiger Impuls von beispielsweise einigen ms Dauer aus dem durch den Auslöseschalter 15 betätigten Impulsgeber 16 zugeführt. Der Impuls aus dem Impulsgeber 16 entspricht dem digitalen Signal EINS. Im Zeitpunkt des Bremsbeginns, wenn durch die kurzgeschlossene Statorwicklung 3 noch kein durch das Rotorfeld induzierter Strom fließt, liefert der Impulsgeber 16 den kurzzeitigen Impuls als digitales Signal EINS an das digitale Verknüpfungsglied 14. Während der Dauer des kurzzeitigen Impulses beginnt der induzierte Strom durch die Statorwicklung 3 zu fließen, wodurch das digitale Verknüpfungsglied 14 über den Stromwandler 12 und den Grenzwertgeber 13 das digitale Signal EINS erhält. Das digitale Verknüpfungsglied 14, dessen Ausgang mit dem Betätigungseingang des zweiten Schalters 9 verbunden ist, erhält bei Beginn des Bremsens das dem drehenden Rotor entsprechende Signal EINS vom Impulsgeber 16, während der Grenzwertgeber 13 noch das Signal NULL liefert. Nachdem der induzierte Strom durch die Statorwicklung 3 fließt, liefert der Grenzwertgeber 13 das digitale Signal EINS. Der Impuls aus dem Impulsgeber 16, dessen Dauer vorgegeben ist, ist inzwischen beendet, so daß aus dem Impulsgeber 16 lediglich das digitale Signal NULL kommt. Das digitale Verknüpfungsglied 14, das eine ODER-Funktion ausführt, steuert den zweiten Schalter 9 an. Solange einer oder jeder der beiden Eingänge des digitalen Verknüpfungsgliedes 14 das Signal EINS, das dem drehenden Rotor entspricht, erhält, ist der zweite Schalter 9 geschlossen. Bei Stillstand des Rotors oder bei Abfall der Rotordrehzahl unter einen vorgegebenen Wert liefert der Grenzwertgeber 13 wegen des Ausbleibens des Kurzschlußstromes in der Statorwicklung 3 bzw. wegen des Absinkens des Kurzschlußstromes unter einen vorgegebenen Grenzwert das digitale Signal NULL. Da auch der Impulsgeber 16 außer bei Beginn des Bremsens das digitale Signal NULL liefert, erhält jeder der beiden Eingänge des Verknüpfungsgliedes 14 das Signal NULL. Das digitale Verknüpfungsglied 14 liefert daraufhin das Ausgangssignal NULL und bewirkt damit die Öffnung des zweiten Schalters 9. Der pulsierende Gleichstrom von der Phase 5 zur Phase 4 ist damit unterbrochen. Mit Beendigung der Bremsung, die durch den Stillstand des Rotors oder eine vorgegebene niedrige Rotordrehzahl signalisiert wird, wird der durch die Statorwicklungen 1 und 2 fließende Gleichstrom durch die Schaltungsanordnung selbsttätig abgeschaltet. Energieverluste, die durch ein Weiterfließen des Gleichstromes infolge einer fest vorgegebenen Bremszeit verursacht werden, sind damit ausgeschlossen. Durch dieses Verfahren und die zugehörige Schaltungsanordnung ist die Bremszeit unabhängig von wechselnden Lasteinflüssen an der Antriebsmaschine. Die Bremszeit wird immer automatisch an die jeweilige tatsächlich erforderliche Bremsdauer angepaßt. Die Schaltungsanordnung gewährleistet ein sicheres Bremsen einer Drehstromasynchronmaschine bis zum Stillstand. Bei hohen Schaltzahlen ergibt sich eine niedrigere Betriebstemperatur des Motors. Ein vorgeschalteter Motorschutzschal-

**0041191**

ter kann bei Schaltbetrieb des Motors besser an den Motor angepaßt werden, wodurch die Sicherheit gegen Überlastung erhöht wird, wenn kein Thermistorschutz vorhanden ist. Die Erfassung der Drehzahl des Rotors mit einem als Stromfühler wirkenden Stromwandler erfordert einen geringeren Aufwand als andere Drehzahlaufnehmer, beispielsweise ein Tachogenerator oder eine optische Abtastung.

Die Parallelschaltung aus dem ersten Schalter 7 und der Reihenschaltung aus dem Stromrichter 8 und dem zweiten Schalter 9 kann durch eine Antiparallelschaltung zweier Thyristoren realisiert werden, die gemeinsam angesteuert und gelöscht werden. Ebenso können die beiden Schalter 10 und 11 jeweils aus einer Antiparallelschaltung zweier gemeinsam angesteuerter und gelöschter Thyristoren bestehen. Weiterhin kann jeder der Schalter 7, 9, 10 und 11 als Solid-State-Relais ausgeführt sein.

1 Figur
2 Patentansprüche

Patentansprüche

1. Verfahren zur Gleichstrombremsung einer Drehstromasynchronmaschine mit drei Statorwicklungen in Sternschaltung, wobei zum Bremsen die erste und die zweite Statorwicklung mit Gleichstrom beaufschlagt werden und gleichzeitig die dritte Statorwicklung kurzgeschlossen wird, d a - d u r c h g e k e n n z e i c h n e t , daß mit Beginn des Bremsens der Kurzschlußstrom durch die dritte Statorwicklung (3) erfaßt wird und bei Beendigung des Kurzschlußstromes der Gleichstrom abgeschaltet wird.

2. Schaltungsanordnung zur Durchführung eines Verfahrens nach Anspruch 1, in der der ersten Statorwicklung eine Parallelschaltung aus einem in Betriebsstellung geschlossenen ersten Schalter und einer Reihenschaltung aus einem Stromrichterventil und einem in Betriebsstellung geöffneten zweiten Schalter vorgeschaltet ist und der dritten Statorwicklung, der ein in Betriebsstellung geöffneter dritter Schalter parallelgeschaltet ist, ein in Betriebsstellung geschlossener vierter Schalter vorgeschaltet ist, d a d u r c h g e k e n n z e i c h n e t , daß ein Stromfühler (12) im Stromkreis der kurzgeschlossenen dritten Statorwicklung (3) mit dem Eingang eines Grenzwertgebers (13) verbunden ist, daß der Ausgang des Grenzwertgebers (13) mit dem ersten Eingang eines digitalen Verknüpfungsgliedes (14) mit disjunktiver Verknüpfung verbunden ist, daß der Ausgang eines Auslöseschalters (15) mit den Betätigungseingängen des ersten, des dritten und des vierten Schalters (7, 10, 11) verknüpft und mit dem Eingang eines Impulsgebers (16) verbunden ist, dessen Ausgang dem zweiten Eingang des digitalen Verknüpfungsgliedes (14) zugeführt ist, und daß der Ausgang des digitalen Verknüpfungsgliedes (14) mit dem Betätigungseingang des zweiten Schalters (9) verbunden ist.